# EUROPÄISCHE PATENTSCHRIFT

(11) **EP 1 268 335 B1**
(45) Veröffentlichungstag und Bekanntmachung des Hinweises auf die Patenterteilung: **19.11.2008**
(21) Anmeldenummer: 01911323.2
(22) Anmeldetag: 21.03.2001
(51) Int. Cl.: B66B 1/30

(54) **EINRICHTUNG UND VERFAHREN ZUR REDUZIERUNG DER NETZANSCHLUSSLEISTUNG VON AUFZUGSANLAGEN**
DEVICE AND METHOD FOR REDUCING THE POWER OF THE SUPPLY CONNECTION IN LIFT SYSTEMS
DISPOSITIF ET PROCEDE DE REDUCTION DE LA PUISSANCE DE L'ALIMENTATION PAR LE SECTEUR POUR DES INSTALLATIONS D'ASCENSEUR

(30) Priorität: 31.03.2000 EP 00810271
(43) Veröffentlichungstag der Anmeldung: 02.01.2003
(73) Patentinhaber: INVENTIO AG, 6052 Hergiswil (CH)
(72) Erfinder: EILINGER, Thomas, Morristown, NJ 07960 (US)
(86) Internationale Anmeldenummer: PCT/CH2001/000174
(87) Internationale Veröffentlichungsnummer: WO 2001/074699

(56) Entgegenhaltungen:
- EP-A- 0 645 338
- EP-A- 0 967 418

## Beschreibung

Die Erfindung bezieht sich auf eine Einrichtung zur Reduktion der erforderlichen Netzanschlussleistung von Aufzugsanlagen mit elektrischen Hubantrieben, die eine Energiespeichereinheit für elektrische Energie aufweist sowie auf ein Verfahren, das demselben Zweck dient.

Personen- und Lastenaufzüge sind üblicherweise durch Elektromotoren angetrieben. Es kommen dabei verschiedene Prinzipien der Hubkraftübertragung auf den Fahrkorb zur Anwendung. In einer Ausführung wirkt ein Rotationsmotor direkt oder über ein Übersetzungsgetriebe auf eine Treibscheibe, die Tragseile antreibt, welche einerseits den Fahrkorb und andererseits ein Ausgleichsgewicht tragen und bewegen. In einer anderen Ausführung treibt ein Rotationsmotor eine Hydraulikpumpe an, die im Wesentlichen über eine Druckflüssigkeit die Kolbenstange(n) eines oder mehrerer Hydraulikzylinder(s) betätigt, welche direkt oder über Seiltriebe den Fahrkorb antreiben. Gemäss einem weiteren Antriebsprinzip wird der Fahrkorb oder sein durch Tragseile mit diesem verbundenen Ausgleichsgewicht mittels eines Linearmotors auf und ab bewegt. In modernen Aufzugsanlagen erfolgt eine Regelung der Fahrkorbgeschwindigkeit meist über eine geregelte Veränderung der Frequenz des Motor-Wechselstroms.

Allen diesen Antrieben ist gemeinsam, dass die Elektromotoren während Beschleunigungs- und Abbremsphasen 2 bis 4 mal mehr elektrische Leistung umsetzen als bei Fahrt mit konstanter Geschwindigkeit, dass die erforderliche Antriebsleistung in Abhängigkeit von der jeweiligen Nutzlast stark unterschiedlich ist, und dass das Verhältnis zwischen der täglichen Betriebszeit dieser Elektromotoren und ihrer Pausenzeit üblicherweise sehr gering, z. B. kleiner als 10% ist.

Die kurzzeitigen Leistungsspitzen beim Anfahren und Bremsenwirken sich auf die Bemessung und somit die Kosten für Zuleitungen, Transformatoren, EMV-Eingangsfilter, Sicherungen und Schaltgeräte aus. Ein weiterer Nachteil der beschriebenen Leistungsspitzen liegt darin, dass diese Spannungsschwankungen im Netz verursachen können und damit die Beleuchtungsqualität von Lampen oder die Funktion von elektronischen Geräten negativ beeinflussen. Ausserdem haben die erwähnten kurzzeitig auftretenden Leistungsspitzen vielerorts erhöhte wiederkehrende Anschlussgebühren zur Folge.

Die Dimensionierung der Komponenten des Netzanschlusses sowie einiger Bauteile der Antriebs-Stromversorgung, wie auch die Höhe der wiederkehrenden leistungsabhängigen Anschlussgebühren sind jedoch hauptsächlich vom Leistungsbezug während der relativ kurzen Betriebszeit des Aufzugs-Antriebsmotors abhängig, auch wenn der durchschnittliche Leistungsbedarf nur einen Bruchteil davon ausmacht.

EP 0 645 338 B1 beschreibt eine Einrichtung für Aufzugsanlagen mit einer Energiespeichereinrichtung, deren Wirkprinzip nicht näher definiert ist. Diese Energiespeichereinrichtung wird durch ein dauernd vom Netz gespeistes Ladegerät kontinuierlich mit Gleichstrom geladen. Bei Spitzen-Leistungsbedarf wird gespeicherte Energie zusätzlich zu einem Energieanteil, der in begrenztem Masse direkt dem Netz entnommen wird, ins Antriebssystem eingespeist. Durch Begrenzung der direkt aus dem Netz entnommenen Leistung auf einen Wert, der unterhalb der für Fahren mit konstanter Geschwindigkeit erforderlichen Antriebsleistung liegt, kann der während der Fahrzeit auftretende Energieverbrauch auch über die Zeit verteilt werden, in der der Aufzug stillsteht, dadurch, dass der Akkumulator während der Fahrzeit die Leistungsdifferenz liefert und während der Stillstandszeit wieder geladen wird. Damit kann ein Netz-Anschlusswert erreicht werden, der unter der für Fahren mit konstanter Geschwindigkeit erforderlichen Leistung liegt.

In dem in EP 0 645 338 B1 zitierten Stand der Technik (GB 2 139 831 und DE 3 743 660), sind Energiespeichereinrichtungen auf Akkumulator-Basis beschrieben. Weder in der Beschreibung noch in den Ansprüchen in EP 0 645 338 B1 lässt sich ein Hinweis auf ein anderes Speicherprinzip finden. Die nicht näher definierte Energiespeichereinrichtung wird durch ein Ladegerät mit Schnelllade- und Erhaltungslademodus gespeist, wie dies für Akkumulatoren üblich ist. Aufgrund dieser Fakten wird angenommen, dass es sich bei der in EP 0 645 338 B1 dargestellten Energiespeichereinrichtung um einen elektrochemischen Akkumulator (Sekundärelement) handelt.

Elektrochemische Akkumulatoren weisen für die Anwendung als alleinige Energiespeicher in Aufzugsantrieben einige wesentliche Nachteile auf. Starke Leistungsbedarfsspitzen können nur durch extrem gross dimensionierte Akkumulatoren gedeckt werden, wobei häufige Spitzen-Energieentnahmen deren ohnehin beschränkte Lebensdauer drastisch reduzieren. Die sehr begrenzte zulässige Ladestromstärke eines Akkumulators setzt der Häufigkeit der Deckung von Leistungsbedarfsspitzen zusätzlich enge Grenzen. Für die Rekuperierung von Bremsenergie in einen Akkumulator ist diese Begrenzung der zulässigen Ladestromstärke ebenfalls ein gravierendes Hindernis.

Aus der EP 0 967 418 A1 ist ein Automatikgetriebe für Personenkraftwagen bekannt, bei dem in einer Superkapazität gespeicherte elektrische Energie einen Elektromotor versorgt, wenn dieser den Getriebestufenwechsel bewerkstelligt.

Der vorliegenden Erfindung liegt die Aufgabe zugrunde, eine Einrichtung zur Reduktion der Netzanschlussleistung von Aufzugsanlagen der vorstehend beschriebenen Art zu schaffen, die die genannten Nachteile vermeidet. Insbesondere soll die Einrichtung hohe und häufige Leistungsspitzen kompensieren können, eine hohe Lebensdauer aufweisen und durch die Fähigkeit der schnellen Energieaufnahme in der Lage sein, anfallende rekuperierte Bremsenergie zwischenzuspeichern.

Die Aufgabe wird durch die in den Patentansprüchen 1 und 9 angegebenen Merkmale gelöst, wobei nach Anspruch 1 eine Einrichtung zur Reduktion der Netzanschlussleistung von Aufzugsanlagen mit elektrischen Antriebssystemen eine Energiespeichereinheit für elektrische Energie aufweist und
dadurch gekennzeichnet ist, dass diese Energiespeichereinheit Kondensatoren in Form von Superkapazitäten enthält, und wobei nach Anspruch 9 ein Verfahren zur Reduktion der Netzanschlussleistung von Aufzugsanlagen mit elektrischen Antriebssystemen dadurch gekennzeichnet ist, dass elektrische Energie in einer Energiespeichereinheit (11), welche Kondensatoren in Form von Superkapazitäten (13) enthält, gespeichert wird, und dass vor jeder Aufzugsfahrt aufgrund von vorhandenen Informationen wie Lastsituation und Fahrziel der Energiebedarf für die bevorstehende Fahrt ermittelt wird, dass geprüft wird, ob der momentan vorhandene Energieinhalt der Energiespeichereinheit (11) zusammen mit der kontinuierlichen Speisung aus dem Netz für die Fahrt ausreicht, und dass gegebenenfalls der Start solange verzögert wird, bis die Energiespeichereinheit ausreichend aufgeladen ist.

Die Erfindung beruht auf dem Gedanken, neuartige Kondensatoren, sogenannte Superkapazitäten, anstelle von oder in Kombination mit Akkumulatoren als Energiespeicher einzusetzen, wobei üblicherweise eine Anordnung von mehreren Superkapazitäten in Reihenschaltung zur Anwendung kommt, die eine Gesamtkapazität von mehreren Farad bei zulässigen Spannungen von 100 bis 300 V aufweist. Superkapazitäten sind Doppelschicht-Kondensatoren, deren Elektroden aus aktivem Kohlenstoff bestehen und dadurch wirksame Oberflächen von mehreren Tausend Quadratmetern pro Gramm Kohlenstoff haben, wobei minimalste Abstände im Nanometerbereich die beiden Elektroden trennen. Aus diesen Eigenschaften resultiert die extrem hohe Kapazität dieser im Fachhandel erhältlichen Energiespeicher.

Die erfindungsgemässe Einrichtung zur Reduktion der Netzanschlussleistung bei Aufzugsanlagen, wo eine Vielzahl von Anfahr- und Bremsvorgängen hohe Leistungsspitzen verursachen, weist verschiedene Vorteile auf. Im Vergleich mit Energiespeichern auf Akkumulator-Basis verfügen Superkapazitäten über folgende sehr positiven Eigenschaften:
- praktisch unbegrenzte Lebensdauer im Vergleich mit Akkumulatoren
- hohe zulässige Lade- und Entladeleistung bei einer hohen Zahl von Lade- und Entladezyklen und bei geringem Gewicht (Leistungsdichte von Superkapazitäten ca. 10 - 15 kW/kg; Leistungs-dichte von Akkumulatoren ca. 300 - 1000 W/kg)
- volle Ladung und Entladung auch bei hohen Lade- und Entladeströmen gewährleistet
- keine Wartung erforderlich
- keine giftigen oder umweltbelastenden Stoffe enthaltend
- geringes Gewicht im Vergleich mit Akkumulatoren gleicher Leistungsdichte

Vorteilhafte Ausgestaltungen und Weiterbildungen der Erfindung gehen aus den Unteransprüchen hervor.

Für Anwendungen, bei denen die erfindungsgemässe Einrichtung nur zur Kompensation von Leistungsspitzen und gegebenenfalls zusätzlich zu einer relativ mässigen Reduktion des Netzanschlusswerts dient, wird zweckmässigerweise eine Energiespeichereinheit eingesetzt, die als Speichermedium ausschliesslich Superkapazitäten enthält.

Für Anwendungen, bei denen die erfindungsgemässe Einrichtung neben der Kompensation von Leistungsspitzen auch einer Reduktion des Netzanschlusswerts der Aufzugsanlage weit unter den Energiebedarf für Fahren mit konstanter Geschwindigkeit dienen soll, wird vorteilhaft eine Energiespeichereinheit eingesetzt, die aus einer Kombination von Superkapazitäten mit elektrochemisch wirkenden Sekundärelementen (Akkumulatoren) besteht, da letztere im Vergleich mit Superkapazitäten eine höhere Energiedichte (Wh/kg), d. h. bei gleichem Gewicht eine höhere Speicherkapazität aufweisen. Durch geeignete Limitierung der aus dem Netz entnommenen Leistung kann diese über Betriebs- und Stillstandszeit so verteilt werden, dass die erforderliche Netzanschlussleistung auf einen Bruchteil der für eine Fahrt mit konstanter Geschwindigkeit erforderlichen Leistung reduziert wird. Dies wird dadurch ermöglicht, dass während Phasen, in denen die Motorleistung über der limitierten Netzentnahmeleistung liegt, die Differenzleistung aus der Energiespeichereinheit eingespeist wird, wobei kurzzeitige Stromspitzen vorwiegend den Superkapazitäten und längerdauernde Konstantleistung vorwiegend dem Akkumulator entnommen werden, und dass insbesondere während der Stillstandszeiten die Energiespeichereinheit wieder aufgeladen wird.

In Aufzugsanlagen, bei denen gar kein Netzanschluss oder nur ein solcher mit minimalem Anschlusswert zur Verfügung steht, kann gemäss einer weiteren Ausgestaltung der Erfindung eine Kombination einer aus Superkapazitäten aufgebauten Energiespeichereinrichtung mit Brennstoffzellen, d. h. mit elektrochemisch wirkenden Primärelementen, eingesetzt werden. Dabei wird die benötigte elektrische Antriebsenergie ganz oder teilweise in den Brennstoffzellen erzeugt, während die Superkapazitäten als Energiespeicher zur Deckung von Leistungsspitzen und zur Verteilung des Leistungsbezugs über einen Teil der Aufzugs-Stillstandszeiten dienen.

In einer bevorzugten Ausführungsform der erfindungsgemässen Einrichtung zur Reduktion der Netzanschlussleistung bei Aufzugsanlagen wirkt diese mit einem oder mehreren Frequenzumrichter(n) zusammen. Jeweils einer dient der Drehzahlregelung eines zugehörigen Aufzugs-Antriebsmotors. Im Wesentlichen besteht ein Frequenzumrichter aus einem Netzstromrichter, einem Gleichspannungs-Zwischenkreis mit Glättungskondensator, sowie einem Wechselrichter mit Steuergenerator. In Ausführungen, bei denen der Netzstromrichter nicht für die Rekuperation der Bremsenergie vorgesehen ist, ist der Gleichspannungszwischenkreis meistens mit einem Bremsmodul ausgerüstet. Die erfindungsgemässe Einrichtung, die eine Energiespeichereinheit aus Superkapazitäten oder aus einer Kombination von diesen mit einem Akkumulator enthält, nimmt Energie (auch Bremsenergie) aus dem erwähnten Gleichspannungs-Zwischenkreis auf und gibt die Energie wieder an diesen ab, während Antriebssituationen, die eine höhere elektrische Leistung beanspruchen, als sie vom strombegrenzten Netzstromrichter geliefert wird.
Eine als Leistungsflussregler bezeichnete Regel- und Steuereinheit sorgt dabei für eine erforderliche Anpassung des Gleichspannungs-Niveaus zwischen der Energiespeichereinheit und dem Zwischenkreis und regelt den Energieaustausch zwischen dieser Energiespeichereinheit und dem Zwischenkreis des Frequenzumrichters.

Eine vorteilhafte Weiterbildung der erfindungsgemässen Einrichtung zur Reduktion der Netzanschlussleistung bei Aufzugsanlagen wird dadurch erreicht, dass die während Bremsphasen durch den Antriebsmotor generierte Leistung, inklusive die dabei generierten Leistungsspitzen, in die Superkapazitäten der Energiespeichereinheit rekuperiert wird. Falls dabei deren Ladekapazität überschritten wird, stoppt der Leistungsflussregler die Energiezufuhr in die Energiespeichereinheit, wodurch die Spannung im Zwischenkreis des Frequenzumrichters ansteigt bis das Bremsmodul aktiviert wird, das die überschüssige elektrische Bremsenergie mit Hilfe eines Bremswiderstands in Wärme umwandelt. Durch Rekuperation der Bremsenergie in die Energiespeichereinheit können effektiv die Kosten für den Energieaufwand gesenkt werden, im Unterschied zur Rekuperation ins Netz, wo diese üblicherweise nicht im Sinne einer Reduktion des Energiebezugs erfasst wird.

In Aufzugsanlagen, in denen ein oder mehrere Aufzugsfahrzeug(e) mit integriertem Antriebssystem verkehren, ist es vorteilhaft, den Frequenzumrichter, die Aufzugssteuereinheit sowie die erfindungsgemässe Einrichtung zur Reduktion der Netzanschlussleistung mobil auf dem oder den Fahrzeug(en) zu installieren. Die Energiespeichereinheit der Fahrzeuge wird dann jeweils über Kontaktelemente oder mittels berührungsfreier Energieübertragungsystemen aufgeladen. Neben der Reduktion der erforderlichen Netzanschlussleistung hat diese Methode den Vorteil, dass Energiezufuhreinrichtungen nicht entlang des gesamten Fahrwegs notwendig sind. Dies ist insbesondere bei Aufzugsanlagen interessant, in denen mehrere Aufzugsschächte vorhanden sind und die Aufzugsfahrzeuge in wechselnden Aufzugschächten verkehren, wobei auch Horizontalfahrten vorkommen.

Bei Aufzugsanlagen, die mehrere benachbarte Aufzüge aufweisen, welche mit frequenzumrichtergeregelten Antrieben ausgerustet sind, ist es vorteilhaft, die GleichspannungsZwischenkreise aller motorseitiger Wechselrichter parallelzuschalten und durch ein einziges Netzmodul speisen zu lassen. An diesen gemeinsamen Zwischenkreis ist eine einzige erfindungsgemasse Einrichtung zur Reduktion der Netzanschlussleistung mit einer Energiespeichereinheit aus Superkapazitäten, gegebenenfalls in Kombination mit Akkumulatoren, angeschlossen. Dadurch wird erreicht, dass Energieausgleichsvorgänge direkt zwischen den einzelnen Motoren stattfinden können, d. h. momentan anfallende Bremsenergie aus einem oder mehreren Antriebsmotor(en) wird direkt von einem oder mehreren momentan antreibenden anderen Antriebsmotor(en) genutzt. Weitere wesentliche Vorteile dieser Ausführungsform sind, dass nur eine einzige Energiespeichereinheit mit ihrer Steuerelektronik, nur ein Netzmodul sowie nur ein einziges Bremsmodul erforderlich sind. In geeigneten Fällen, z. B. bei Gruppen mit mehreren Aufzügen, und wo ins Netz zurückgespeiste Energie sich auch bezahlt macht, ist es zweckmässig, überschüssige Bremsenergie mittels einer Rekuperationseinheit ins Netz zurückzuspeisen, wobei das Bremsmodul dann entfallen kann.

Bei Installationen, wo die verfügbare Anschlussleistung unter der für eine Fahrt mit konstanter Geschwindigkeit erforderlichen Leistung liegt, d. h. wo es unerlässlich ist, während einer solchen Fahrt zusätzlich Energie aus einer Energiespeichereinheit einzuspeisen, ist es zweckmässig, vor Beginn der Fahrt die aktuelle Energieversorgungs-Situation zu überprüfen. Die Aufzugsteuerung arbeitet nach einem Energiemanagement-Verfahren, bei dem vor Beginn einer Fahrt aufgrund von vorhandenen Informationen über die Fahrkorbbelastung und das Fahrziel der Energiebedarf für die bevorstehende Fahrt ermittelt und hierauf geprüft wird, ob der in der Energiespeichereinheit momentan verfügbare Energieinhalt, zusammen mit der limitierten, kontinuierlichen Speisung aus dem Netzanschluss, dafür ausreicht. Gegebenenfalls wird der Start solange verzögert, bis die Energiespeichereinheit genügend geladen ist.

Drei Ausführungsbeispiele der Erfindung werden anhand der beigefügten Zeichnungen weiter erläutert.
Es zeigen:
- Fig. 1a: eine schematische Darstellung eines Aufzugsantriebs mit Frequenzumrichter ohne die erfindungsgemässe Einrichtung zur Reduktion der Netzanschlussleistung.
- Fig. 1b: Diagramme mit für Aufzugsantriebe typischen Leistungsflusskurven.
- Fig. 2a: eine schematische Darstellung eines Aufzugsantriebs mit Frequenzumrichter, ausgrüstet mit der erfindungsgemässen Einrichtung, die Superkapazitäten zur Pufferung von Leistungsspitzen enthält.
- Fig. 2b: Diagramme mit beispielhaften Kurven der durch diese Einrichtung modifizierten Leistungsflüsse.
- Fig. 3a: eine schematische Darstellung eines Aufzugsantriebs mit Frequenzumrichter, ausgerüstet mit der erfindungsgemässen Einrichtung, die Superkapazitäten zur relativ geringfügigen Reduktion des Netzanschlusswerts enthält.
- Fig. 3b: Diagramme mit beispielhaften Kurven der durch diese Einrichtung modifizierten Leistungsflüsse.
- Fig. 4a: eine schematische Darstellung eines Aufzugsantriebs mit Frequenzumrichter, ausgerüstet mit der erfindungsgemässen Einrichtung, die Superkapazitäten in Kombination mit Akkumulatoren für eine starke Reduktion des Netzanschlusswerts enthält.
- Fig. 4b: Diagramme mit beispielhaften Kurven der durch diese Einrichtung modifizierten Leistungsflüsse.
- Fig. 5: eine schematische Darstellung einer Parallelschaltung mehrerer Gleichspannungszwischenkreise von Frequenzumrichtern einer Gruppe von Aufzügen

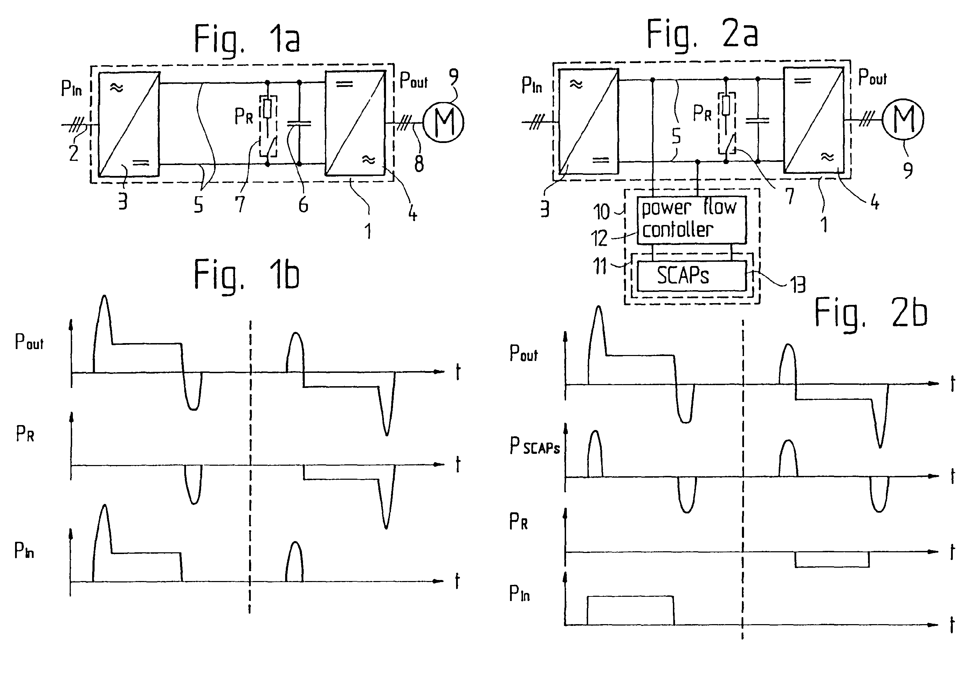

In Fig. 1a, der schematischen Darstellung eines Aufzugsantriebs, stellt 1 einen üblichen Frequenzumrichter ohne eine erfindungsgemässe Einrichtung zur Reduktion der Netzanschlussleistung dar, bestehend aus Netzanschluss 2, Netzstromrichter 3, Wechselrichter 4, Gleichspannungszwischenkreis 5, Glättungskondensator 6, Bremsmodul 7 (mit Bremswiderstand und Bremsbetriebsschalter) und Motoranschluss 8. Mit 9 ist der drehzahlgeregelte Drehstrommotor des Aufzugsantriebs bezeichnet.

Das Diagramm in Fig. 1b zeigt für Aufzugsantriebe typische, von der Zeit t abhängige Leistungsflüsse in den beteiligten Komponenten während eines Fahrzyklus. Die jeweils linke Diagrammseite bezieht sich auf eine Antriebssituation, wo das aus kabinenseitiger Last einerseits und Gegengewicht andererseits resultierende Drehmoment der Antriebsrichtung entgegenwirkt (positive Last), und die rechte Diagrammseite bezieht sich auf eine Antriebssituation, wo das aus kabinenseitiger Last und Gegengewicht resultierende Drehmoment in Antriebsrichtung wirkt (negative Last). Pₒᵤₜ bedeutet die vom Drehstrommotor 9 aus dem Frequenzumrichter 1 bezogene Ausgangsleistung, P_{R} die im Widerstand des Bremsmoduls 7 in Wärme umgewandelte, vom Drehstrommotor 9 zurückgespeiste Bremsleistung und Pᵢₙ die vom Frequenzumrichter aus dem Netz bezogene Leistung. Zu erkennen ist, dass die gesamte Antriebsleistung inklusive die Anfahrleistungsspitzen aus dem Netz bezogen wird (P in) und die gesamte vom Drehstrommotor 9 zurückgespeiste Bremsleistung im Widerstand des Bremsmoduls 7 nutzlos in Wärmeleistung P_{R} umgewandelt wird.

Fig. 2a stellt wiederum schematisch einen Aufzugsantrieb mit Frequenzumrichter 1 dar, der aus den gleichen Komponenten besteht, wie der in Fig. 1a beschriebene, jedoch mit der erfindungsgemässen Einrichtung 10 zur Reduktion der Netzanschlussleistung ausgerüstet ist. In der dargestellten Version besteht die Einrichtung aus einer aus Superkapazitäten 13 gebildeten Energiespeichereinheit 11 und einem Leistungsflussregler 12. Dieser Leistungsflussregler hat einerseits die Aufgabe, den Energiefluss zwischen den unterschiedlichen Spannungsniveaus des Gleichspannungszwischenkreises 5 und der Energiespeichereinheit 11 einzustellen und bei Energieüberschuss diese Energiespeichereinheit aufzuladen. Andererseits speist der Leistungsflussregler 12 die gespeicherte Energie bei erhöhtem Bedarf wieder in den genannten Gleichspannungszwischenkreis 5 zurück. Dabei prägt er, basierend auf der Messung der dem Wechselrichter 4 aus dem Gleichspannungszwischenkreis 5 zufliessenden Stromstärke, diesem Gleichspannungszwischenkreis 5 den zur Reduktion der Netzanschluss-Leistungsspitzen erforderlichen Strom ohne Beeinflussung der Zwischenkreisspannung auf. Die Gesamtkapazität der seriegeschalteten Superkapazitäten 13 ist bei der in Fig. 2 beschriebenen Version ausschliesslich auf die Pufferung solcher Leistungsspitzen ausgelegt.

Fig. 2b zeigt die bereits unter Fig. 1b erläuterten Diagramme betreffend den zeitabhängigen Verlauf der Leistungsflüsse in den beteiligten Komponenten. Zusätzlich ist hier der als P_{SCAPs} bezeichnete Leistungsfluss zwischen dem Gleichspannungszwischenkreis 5 und der aus Superkapazitäten 13 gebildeten Energiespeichereinheit 11 dargestellt. Zu erkennen ist, dass die aus dem Netz bezogene Leistung Pᵢₙ auf den für eine beschleunigungsfreie Fahrt erforderlichen Wert ohne Spitzen reduziert ist, wobei noch immer ein Grossteil der vom Drehstrommotor 9 zurückgespeisten Bremsenergie im Widerstand des Bremsmoduls 7 nutzlos in Wärmeleistung P_{R} umgewandelt wird.

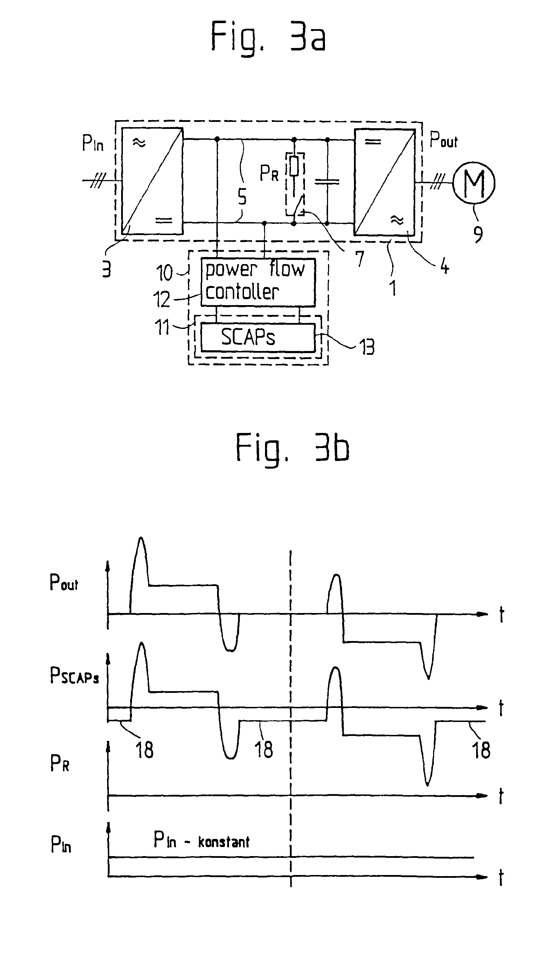

Fig. 3a zeigt wiederum einen wie mit Fig. 1a und 2a beschriebenen Aufzugsantrieb mit einem Frequenzumrichter 1. Wie der mit Fig. 2a dargestellte Antrieb, weist die hier beschriebene Ausführung die erfindungsgemässe Einrichtung 10 zur Reduktion der Netzanschlussleistung auf, die die aus Superkapazitäten 13 gebildete Energiespeichereinheit 11 und einen Leistungsflussregler 12 enthält. Die Gesamtkapazität der hier beschriebenen Energiespeichereinheit ist jedoch nicht nur für die Pufferung von Leistungsspitzen ausgelegt, sondern so gross, dass während einer Aufzugsfahrt ein namhafter Anteil der erforderlichen elektrischen Leistung aus der Energiespeichereinheit 11 in den Gleichspannungszwischenkreis 5 des Frequenzumrichters 1 eingespeist werden kann. Diese Einspeisung wird, wie in der Beschreibung zu Fig. 2a erläutert, durch den Leistungsflussregler 12 geregelt und erfolgt zusätzlich zur auf einen bestimmten Wert limitierten Speisung aus dem Netz durch den Netzstromrichter 3. Geladen wird die Energiespeichereinheit 11 einerseits während der Stillstandszeiten des Aufzugs aus dem durch den Netzstromrichter 3 gespeisten Gleichspannungszwischenkreis 5 und andererseits durch vom Drehstrommotor 9 über diesen Zwischenkreis zurückgespeiste Bremsenergie. Diese Rückspeisung von Bremsenergie in die Energiespeichereinheit 11 erfolgt so lange, bis die Grenze der Ladekapazität erreicht ist. Nicht mehr speicherbare elektrische Bremsenergie wird dann im Bremsmodul 7 in Wärme umgewandelt. Die Rekuperation von Bremsenergie bewirkt eine ganz wesentliche Herabsetzung des Energieverbrauchs der Anlage und damit auch der erforderlichen Netzanschlussleistung. Da die Gesamtfahrzeit eines Aufzugs üblicherweise nur einen Bruchteil der Stillstandszeit ausmacht, bringt dieses Verfahren ausserdem den Vorteil, dass ein erheblicher Teil der während der Fahrzeiten vom Drehstrommotor 9 bezogenen Energiemenge über die gesamte Bereitschaftszeit des Aufzugs verteilt dem Netz entnommen wird, wodurch die erforderliche Anschlussleistung der Anlage zusätzlich reduziert wird. Die Superkapazitäten 13 ermöglichen die Bereitstellung einer für dieses Verfahren ausreichenden Speicherkapazität, wobei hohe Leistungsspitzen kompensiert werden und bis zur Erschöpfung der Lebensdauer eine im Vergleich mit Akkumulatoren um Zehnerpotenzen höhere Anzahl von Lade- und Entladezyklen stattfinden können.

Fig. 3b zeigt wiederum die bereits erläuterten Diagramme betreffend den zeitabhängigen Verlauf der Leistungsflüsse in den beteiligten Komponenten. Mit 18 sind die Zeitbereiche bezeichnet, in welchen ein Ladestrom in die Energiespeichereinheit 10 fliesst. Bemerkenswert ist, dass ein wesentlich grösserer Leistungsfluss P_{SCAPs} zwischen dem Gleichspannungszwischenkreis 5 und den Superkapazitäten 13 der Energiespeichereinheit 11 stattfindet, als bei der mit Fig. 2a beschriebenen Ausführung, dass im Normalfall keine Bremsleistung P_{R} ins Bremsmodul 7 fliesst und dass die Netzanschlussleistung Pᵢₙ auf einen Wert reduziert ist, der unterhalb der für eine Fahrt mit konstanter Geschwindigkeit erforderlichen Leistung liegt. Die Gesamtkapazität der Superkapazitäten 13 und die Limitierung der aus dem Netz bezogenen Leistung Pᵢₙ sind idealerweise so ausgelegt, dass Pᵢₙ während des Aufzugsbetriebs in etwa konstant ist.

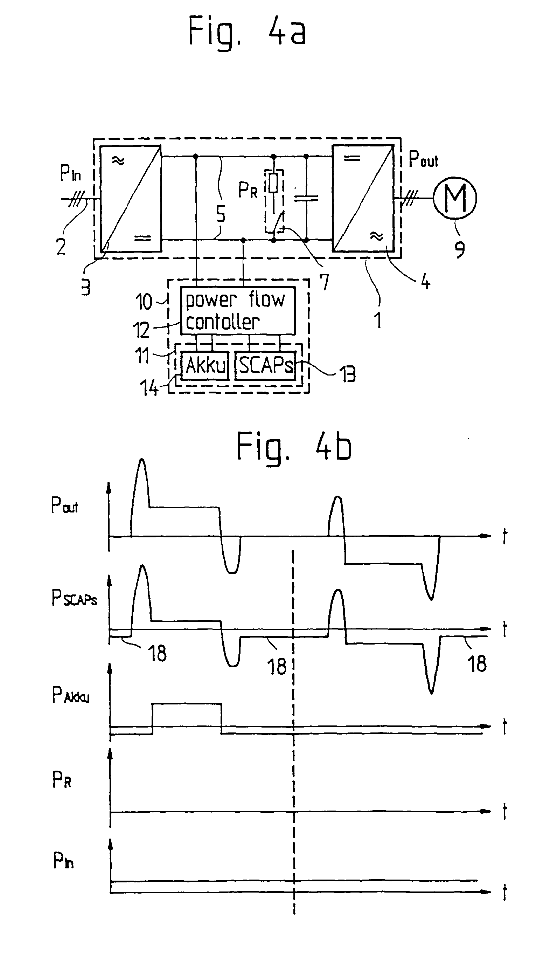

Fig. 4a stellt eine weitere Ausführungsform eines Aufzugsantriebs mit einem Frequenzumrichter und der erfindungsgemässen Einrichtung 10 zur Reduktion der Netzanschlussleistung dar. Die hier vorliegende Version dieser Einrichtung enthält, ähnlich wie die mit Fig. 3a beschriebene, eine Energiespeichereinheit 11 sowie einem Leistungsflussregler 12, wobei diese Energiespeichereinheit 11 aus einer Parallelschaltung von Superkapazitäten 13 mit einem elektrochemisch wirkenden Akkumulator 14 besteht. Eine solche Anordnung kann die Anforderungen an eine Energiespeichereinheit 11 für einen Aufzugsantrieb in idealer Weise erfüllen, da die Superkapazitäten 13 die hohen, pulsförmigen Lade- und Entladeströme ertragen und der Akkumulator insbesondere für kleinere, über längere Zeit andauernde Lade- und Entladeströme geeignet ist. Ein für diese Kombination entwickelter Leistungsflussregler sorgt dafür, dass die bei Anfahr- und Bremsvorgängen auftretenden Leistungsspitzen weitgehend durch die Superkapazitäten 13 kompensiert werden, dass ein wesentlicher Teil der bei Fahrten mit negativer Last rekuperierten Bremsenergie im Akkumulator 14 gespeichert wird, dass dieser während der gesamten Stillstandszeit aus dem Gleichspannungszwischenkreis 5 des Frequenzumrichters 1 geladen wird und dass dieser seine gespeicherte Energie, zusätzlich zur limitierten Speisung durch den Netzstromrichter 3, während unbeschleunigten Fahrtabschnitten mit positiver Last an den Gleichspannungszwischenkreis abgibt. Mit der beschriebenen Technik ist es möglich, einen noch grösseren Teil der während der Fahrzeiten vom Drehstrommotor 9 bezogenen Energiemenge über die gesamte Bereitschaftszeit des Aufzugs verteilt dem Netz zu entnehmen, was die erforderliche Anschlussleistung der Anlage auf einen Bruchteil der für eine Fahrt mit konstanter Geschwindigkeit benötigten Leistung reduziert.
Dank der Speisung des Akkumulators 14 aus dem Gleichspannungszwischenkreis 5 ist kein am Netz 2 separat angeschlossenes Ladegerät erforderlich.

Fig. 4b zeigt die bekannten Diagramme betreffend den Verlauf der zeitabhängigen Leistungsflüsse in den gemäss Fig. 4a beteiligten Komponenten. Eine zusätzliche, mit P_{Akku} bezeichnete Kurve veranschaulicht den Leistungsfluss zwischen dem Akkumulator 14 und dem Gleichspannungszwischenkreis 5. Mit 18 sind die Zeitbereiche bezeichnet, in welchen ein Ladestrom in die Superkapazitäten 13 oder in den Akkumulator 14 fliesst. Zu erkennen ist aus diesen Diagrammen, dass bei der hier beschriebenen erfindungsgemässen Einrichtung zur Reduktion der Netzanschlussleistung im Normalfall keine vom Drehstrommotor 9 zurückgespeiste Bremsleistung P_{R} im Widerstand des Bremsmoduls 7 in Wärme umgewandelt, sondern der kombinierten Energiespeichereinheit 11 zur Zwischenspeicherung zugeführt wird, und dass die erforderliche Anschlussleistung Pᵢₙ nur noch einem Bruchteil der für eine Fahrt mit konstanter Geschwindigkeit benötigten Leistung entspricht.

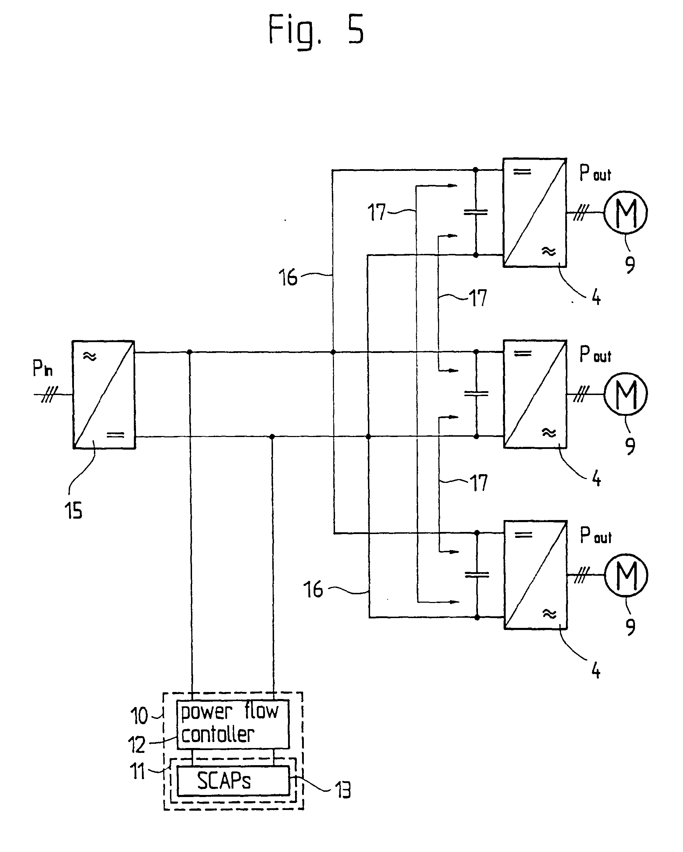

Fig. 5 zeigt schematisch die Anordnung von Frequenzumrichter-Antrieben einer Gruppe von mehreren Aufzügen. Jedem der Drehstrommotoren 9 ist ein Wechselrichter 4 zugeordnet, und alle diese Wechselrichter werden durch einen gemeinsamen Gleichspannungszwischenkreis 16 gespeist. An diesen Gleichspannungszwischenkreis 16 ist eine erfindungsgemässe Einrichtung 10 zur Reduktion der Netzanschlussleistung, bestehend aus der Energiespeichereinheit 11 und dem Leistungsflussregler 12, angeschlossen. Eine solche Anordnung ermöglicht die durch Pfeile 17 symbolisierten Ausgleichsvorgänge zwischen den Leistungsflüssen zu und von den einzelnen Drehstrommotoren 9, wodurch sich die für eine gewünschte Reduktion der Netzanschlussleistung erforderliche Kapazität der Energiespeichereinheit 11 wesentlich verringert. Normalerweise besteht die Energiespeichereinheit 11 in einer solchen Anordnung ausschliesslich aus Superkapazitäten 13. Die Energiezufuhr zu diesem gemeinsamen Gleichspannungszwischenkreis 16 erfolgt hier über ein einziges Netzmodul 15. Dieses wirkt einerseits als Netzstromrichter und andererseits als Rekuperationseinheit. In seiner Funktion als Rekuperationseinheit rekuperiert das Netzmodul denjenigen Anteil an der von den Drehstrommotoren 9 zurückgespeisten elektrische Bremsenergie ins Netz, welcher weder für die erwähnten Ausgleichsvorgänge genutzt, noch, bei voll geladener Energiespeichereinheit 11, von dieser aufgenommen werden kann. Damit erübrigt sich der Einbau der üblicherweise in separaten Gleichspannungszwischenkreisen enthaltenen Bremsmodule.

## Patentansprüche

1. Einrichtung zur Reduktion der Netzanschlussleistung von Aufzugsanlagen mit elektrischen Antriebssystemen, die eine Energiespeichereinheit (11) für elektrische Energie aufweist,
**dadurch gekennzeichnet,**
**dass** die Energiespeichereinheit (11) Kondensatoren in Form von Superkapazitäten (13) enthält.

2. Einrichtung nach Anspruch 1, **dadurch gekennzeichnet, dass** die Energiespeichereinheit (11) als Speichermedium ausschliesslich Superkapazitäten (13) enthält.

3. Einrichtung nach Anspruch 1, **dadurch gekennzeichnet, dass** die Energiespeichereinheit (11) als Speichermedium eine Kombination von Superkapazitäten (13) mit Akkumulatoren (14), d. h. mit elektrochemisch wirkenden Sekundärelementen, enthält.

4. Einrichtung nach Anspruch 1, **dadurch gekennzeichnet, dass** die Energiespeichereinheit (11) aus einer Kombination von Superkapazitäten (13) mit Brennstoffzellen besteht.

5. Einrichtung nach einem der Ansprüche 1 bis 4, **dadurch gekennzeichnet, dass** sie mit einem oder mehreren Frequenzumrichter(n) (1) zusammenwirkt, mit dem oder denen die Drehzahl eines jeweils zugehörigen Aufzugs-Drehstrommotors (9) und somit die Fahrgeschwindigkeit des entsprechenden Aufzugs geregelt wird.

6. Einrichtung nach einem der Ansprüche 1 bis 5, **dadurch gekennzeichnet, dass** anfallende Bremsenergie bis zur vollständigen Kapazitätsausnutzung der Energiespeichereinheit (11) zugeführt und allenfalls überschüssige Bremsenergie im Bremsmodul (7) des Frequenzumrichters (1) in Wärme umgewandelt wird.

7. Einrichtung nach einem der Ansprüche 1 bis 6, **dadurch gekennzeichnet, dass** sie entweder stationär im Gebäude oder mobil auf Aufzugsfahrzeugen mit integrierten Fahrantrieben installiert ist.

8. Einrichtung nach einem der Ansprüche 1 bis 6, **dadurch gekennzeichnet, dass** bei einer Gruppe von mehreren Aufzügen mit frequenzumrichtergeregelten Antrieben die Gleichspannungs-Zwischenkreise (5) mehrerer motorseitiger Wechselrichter zu einem gemeinsamen Zwischenkreis (16) parallelgeschaltet und von einem einzigen Netzmodul (15) gespeist sind, und dass eine einzige erfindungsgemässe Energiespeichereinheit (11) an den gemeinsamen Gleichspannungszwischenkreis (16) angeschlossen ist.

9. Verfahren zur Reduktion der Netzanschlussleistung von Aufzugsanlagen mit elektrischen Antriebssystemen,
**dadurch gekennzeichnet,**
**dass** elektrische Energie in einer Energiespeichereinheit (11), welche Kondensatoren in Form von Superkapazitäten (13) enthält, gespeichert wird, und dass vor jeder Aufzugsfahrt aufgrund von vorhandenen Informationen wie Lastsituation und Fahrziel der Energiebedarf für die bevorstehende Fahrt ermittelt wird, dass geprüft wird, ob der momentan vorhandene Energieinhalt der Energiespeichereinheit (11) zusammen mit der kontinuierlichen Speisung aus dem Netz für die Fahrt ausreicht, und dass gegebenenfalls der Start solange verzögert wird, bis die Energiespeichereinheit ausreichend aufgeladen ist.

## Claims

1. Device to reduce the power supply connection rating of elevator installations with electric drive systems which has an energy storage unit (11) for electric energy **characterized in that**
the energy storage unit (11) contains capacitors in the form of supercapacitors (13).

2. Device according to Claim 1, **characterized in that** the energy storage unit (11) contains as storage medium only supercapacitors (13).

3. Device according to Claim 1, **characterized in that** the energy storage unit (11) contains as storage medium a combination of supercapacitors (13) with accumulators (14), i.e. with electrically-acting secondary elements.

4. Device according to Claim 1, **characterized in that** the energy storage unit (11) consists of a combination of supercapacitors (13) with fuel cells.

5. Device according to one of Claims 1 to 4, **characterized in that**
it operates in conjunction with one or more frequency converters (1) with each of which the rotational speed of an associated three-phase elevator motor (9) and thereby the traveling speed of the corresponding elevator is regulated.

6. Device according to one of Claims 1 to 5, **characterized in that**
braking energy which occurs is fed into the energy storage unit (11) until its capacity is fully utilized and that if the need arises excess braking energy is converted into heat in the braking module (7) of the frequency converter (1).

7. Device according to one of Claims 1 to 6, **characterized in that**
it is installed either in stationary fashion in the building or in mobile fashion on elevator vehicles with integral drives for travel.

8. Device according to one of Claims 1 to 6,
**characterized in that**
in a group of several elevators with frequency-controlled drives the DC links (5) of several motor-side inverters are connected in parallel to a common DC link (16) and supplied with power from a single power supply module (15), and that a single energy storage unit according to the invention (11) is connected to the common voltage-controlled DC link (16).

9. Method to reduce the power supply connection rating of elevator installations with electric drive systems,
**characterized in that**
electric energy is stored in an energy storage unit (11) which contains capacitors in the form of supercapacitors (13) and that before each elevator trip the energy required for the forthcoming trip is determined based on available information such as the load situation and trip destination, that a check is made whether the energy content momentarily present in the energy storage unit (11) together with the continuous supply from the power supply is sufficient for the trip, and that if necessary the start is delayed until the energy storage unit is sufficiently charged.

## Revendications

1. Dispositif pour réduire la puissance de l'alimentation par le secteur d'installations d'ascenseur pourvues de systèmes d'entraînement électriques, qui comporte une unité d'accumulation d'énergie (11) pour l'énergie électrique,
**caractérisé en ce que** l'unité d'accumulation d'énergie (11) contient des condensateurs sous forme de supercapacités (13).

2. Dispositif selon la revendication 1, **caractérisé en ce que** l'unité d'accumulation d'énergie (11) ne contient comme moyen d'accumulation que des supercapacités (13).

3. Dispositif selon la revendication 1, **caractérisé en ce que** l'unité d'accumulation d'énergie (11) contient comme moyen d'accumulation une combinaison de supercapacités (13) et d'accumulateurs (14), c'est-à-dire d'éléments secondaires à action électrochimique.

4. Dispositif selon la revendication 1, **caractérisé en ce que** l'unité d'accumulation d'énergie (11) se compose d'une combinaison de supercapacités (13) et de piles à combustible.

5. Dispositif selon l'une des revendications 1 à 4, **caractérisé en ce qu'**il coopère avec un ou plusieurs convertisseurs de fréquence (1) avec lesquels est réglée la vitesse de rotation d'un moteur triphasé d'ascenseur (9) associé et, ainsi, la vitesse de l'ascenseur correspondant.

6. Dispositif selon l'une des revendications 1 à 5, **caractérisé en ce que** l'énergie de freinage produite est transmise à l'unité d'accumulation d'énergie (11) jusqu'à l'utilisation complète de la capacité, et l'éventuelle énergie de freinage excédentaire est transformée dans le module de freinage (7) du convertisseur de fréquence (1) en chaleur.

7. Dispositif selon l'une des revendications 1 à 6, **caractérisé en ce qu'**il est installé de manière stationnaire dans le bâtiment ou mobile sur des véhicules d'ascenseur à entraînement intégré.

8. Dispositif selon l'une des revendications 1 à 6, **caractérisé en ce que** dans le cas d'un groupe de plusieurs ascenseurs pourvus d'entraînements réglés par convertisseur de fréquence, les circuits intermédiaires de tension continue (5) de plusieurs onduleurs prévus côté moteur sont montés en parallèle pour former un circuit intermédiaire commun (16) et sont alimentés par un seul module de réseau (15), et **en ce qu'**une seule unité d'accumulation d'énergie (11) selon l'invention est raccordée au circuit intermédiaire de tension continue commun (16).

9. Procédé pour réduire la puissance de l'alimentation par le secteur d'installations d'ascenseur pourvues de systèmes d'entraînement électriques,
**caractérisé en ce que** l'énergie électrique est accumulée dans une unité d'accumulation d'énergie (11) qui contient des condensateurs sous forme de supercapacités (13), et **en ce qu'**avant chaque trajet de l'ascenseur l'énergie nécessaire pour le trajet prévu est déterminée à partir des informations existantes telles que la situation de la charge et la destination, **en ce qu'**on vérifie si l'énergie présente momentanément dans l'unité d'accumulation (11), avec l'alimentation continue provenant du secteur, est suffisante pour le trajet, et **en ce que** le démarrage est éventuellement retardé jusqu'à ce que l'unité d'accumulation d'énergie soit suffisamment rechargée.
